# EUROPÄISCHE PATENTSCHRIFT

(11) **EP 1 023 001 B1**
(45) Veröffentlichungstag und Bekanntmachung des Hinweises auf die Patenterteilung: **10.12.2003**
(21) Anmeldenummer: 98942655.6
(22) Anmeldetag: 30.07.1998
(51) Int. Cl.: A61C 17/22, A61C 17/34

(54) **BÜRSTENTEIL FÜR EINE ELEKTRISCHE ZAHNBÜRSTE**
BRUSH PIECE FOR AN ELECTRIC TOOTHBRUSH
BROSSETTE POUR BROSSE A DENTS ELECTRIQUE

(30) Priorität: 17.10.1997 DE 19745876
(43) Veröffentlichungstag der Anmeldung: 02.08.2000
(73) Patentinhaber: Braun GmbH, 61476 Kronberg (DE)
(72) Erfinder: FRITSCH, Thomas, D-65817 Eppstein (DE); REICK, Hansjörg, D-61476 Kronberg (DE)
(86) Internationale Anmeldenummer: EP9804750
(87) Internationale Veröffentlichungsnummer: WO99020202

(56) Entgegenhaltungen:
- WO-A-91/07117
- CH-A- 368 780
- FR-A- 1 299 056

## Beschreibung

Die Erfindung betrifft ein Bürstenteil für eine elektrische Zahnbürste, gemäß dem Oberbegriff von Anspruch 1. Des weiteren betrifft die Erfindung eine elektrische Zahnbürste mit einem Handstück und mit einem Bürstenteil der vorstehenden Art.

Ein derartiges Bürstenteil und eine derartige elektrische Zahnbürste sind aus der WO-A-91/07117 bekannt.

In dem Handstück der elektrischen Zahnbürste ist ein Elektromotor und ein Akkumulator untergebracht. Der am Bürstenteil gehaltene Borstenträger ist dreh- oder schwenkbar an dem Trägerrohr angebracht. Über entsprechende Wellen und Gelenke wird im eingeschalteten Zustand eine von dem Elektromotor erzeugte Drehbewegung auf den Borstenträger übertragen. Auf diese Weise werden die Borsten in eine Reinigungsbewegung versetzt. Die Borsten können von einem Benutzer auf die Zahnoberfläche aufgesetzt und zur Pflege der Zähne verwendet werden.

Die Borsten des Bürstenteils verschleißen mit der Zeit, so daß sie ersetzt werden müssen. Unter anderem zu diesem Zweck ist das Bürstenteil auf das Handstück aufgesteckbar und kann damit ausgetauscht werden. Das Trägerrohr des Bürstenteils und die Aufnahme des Handstücks sind derart aufeinander abgestimmt, daß sie formschlüssig zusammengefügt werden können. Auf diese Weise wird das Bürstenteil formschlüssig auf dem Handstück fixiert.

Das Aufstecken und insbesondere das Abziehen des Bürstenteils von dem Handstück darf nicht allzu viel Kraftaufwand von dem Benutzer erfordern. Aus diesem Grund ist, wie erwähnt, nur ein Formschluß zwischen dem Trägerrohr und der Aufnahme vorgesehen. Ein Preßsitz oder dergleichen ist nicht möglich. Dies hat zur Folge, daß das Trägerrohr und die Aufnahme zumeist noch ein gewisses Spiel aufweisen.

Dieses Spiel hat zur Folge, daß im eingeschalteten Zustand der elektrischen Zahnbürste eine Bewegung entsteht, die insbesondere in radialer Richtung, aber auch teilweise in tangentialer Richtung ausgerichtet ist. Diese Bewegung erzeugt unerwünschte Geräusche und Vibrationen des Bürstenteils relativ zum Handstück. Des weiteren wird durch die genannte Bewegung die optimale Übertragung der Reinigungsbewegung auf die Zahnoberfläche zumindest erschwert.

Aufgabe der Erfindung ist es, ein Bürstenteil für eine elektrische Zahnbürste zu schaffen, das eine spielfreie Verbindung mit dem Handstück ermöglicht, ohne daß dies von dem Benutzer einen höheren Kraftaufwand beim Aufstecken oder Abziehen des Bürstenteils erfordert.

Diese Aufgabe wird gemäß dem Bürstenteil von Anspruch 1 gelöst.

Durch die Federmittel wird gewährleistet, daß das Trägerrohr und damit das Bürstenteil spielfrei auf der Aufnahme und damit auf dem Handstück angeordnet ist. Unerwünschte Bewegungen des Bürstenteils im eingeschalteten Zustand und daraus resultierende Geräusche und Vibrationen werden somit sicher vermieden. Gleichzeitig erfordern die Federmittel keinen besonderen Kraftaufwand des Benutzers beim Aufstecken des Bürstenteils auf das Handstück. Aufgrund der federnden Eigenschaften der Federmittel muß der Benutzer nur einen kleinen Widerstand überwinden, um die Federmittel zurückzudrücken und das Trägerrohr auf die Aufnahme aufzustecken. Diese Überwindung eines Widerstands stellt jedoch keinen großen Kraftaufwand und damit keine Verringerung des Komforts für den Benutzer dar, sondern wird von diesem eher als Anzeichen dafür gewertet, daß das Bürstenteil nunmehr korrekt auf das Handstück aufgesteckt ist. Das Bürstenteil wird über die Federmittel so auf der Aufnahme des Handstücks fixiert, daß beim Andrücken (besser beim Ansetzen des Bürstenkopfes auf die Zahnoberfläche) und bei sehr kleinen Andruckkräften keine Relativbewegungen zwischen Profilhülse und Aufnahme entstehen. Dadurch werden auch kleinste Bewegungen der Aufnahme immer zuverlässig auf das Mundstück übertragen.

Die Federmittel sind an dem Bürstenteil angebracht und auf die Aufnahme aufsteckbar.

Bei einer ersten vorteilhaften Ausgestaltung der Erfindung ist eine in das Trägerrohr einsteckbare Hülse vorgesehen, die die Federmittel aufweist. Damit können die Federmittel beispielsweise im Hinblick auf die Materialwahl unabhängig von den anderen Bauteilen des Bürstenteils hergestellt werden. Ebenfalls können die Federmittel konstruktiv so ausgestaltet werden, wie dies für deren vorgesehene Funktion optimal ist, ohne daß hierbei besondere Randbedingungen der sonstigen Bauteile des Bürstenteils beachtet werden müssen.

Bei einer zweiten vorteilhaften Ausgestaltung der Erfindung ist das Trägerrohr mit den Federmitteln versehen. Es ist also kein gesondertes Bauteil erforderlich, um die Federmittel zu realisieren. Statt dessen sind die Federmittel in das Trägerrohr integriert. Dies stellt insbesondere im Hinblick auf den erforderlichen Material- und Herstellungsaufwand eine besonders einfache und zweckmäßige Unterbringung der Federmittel dar.

Bei einer vorteilhaften Weiterbildung der Erfindung weist die Hülse bzw. das Trägerrohr als Federmittel mindestens einen Steg auf, der mit einer in Richtung zu der Aufnahme gekrümmten Biegung versehen ist. Die Federmittel werden also mittels eines oder mehrerer gekrümmter Stege realisiert. Dieser Steg bildet letztlich eine Art Biegebalken, durch dessen Krümmung die erwünschten federnden Eigenschaften erreicht werden. Die Krümmung ist dabei ausgehend von der auf das Trägerrohr aufgesteckten Hülse bzw. ausgehend von dem Trägerrohr in Richtung zu der Aufnahme des Handstücks gerichtet. Wird die Aufnahme in das Trägerrohr eingesteckt, so ist die Krümmung nach innen gerichtet. Es entsteht an der Krümmung des Stegs ein gewisser Widerstand, der durch ein leichtes Drücken von dem Benutzer überwunden werden kann. Danach wirken die federnden Eigenschaften des Stegs derart auf das Bürstenteil ein, daß dieses spielfrei in der Aufnahme gehalten wird.

Besonders zweckmäßig ist es, wenn die Hülse bzw. das Trägerrohr aus einem Kunststoff hergestellt ist. Damit besteht auch der Steg aus Kunststoff, so daß die Biegefähigkeit des Kunststoffs sich Vorteilhaft auf die federnden Eigenschaften des Stegs auswirken.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.
- Figur 1: zeigt einen schematischen Längsschnitt eines Ausführungsbeispiels eines erfindungsgemäßen Bürstenteils für eine elektrische Zahnbürste, und
- Figuren 2a bis 2c: zeigen jeweils schematisch einen Längsschnitt, eine Draufsicht und einen Querschnitt einer Hülse des Bürstenteils der Figur 1.

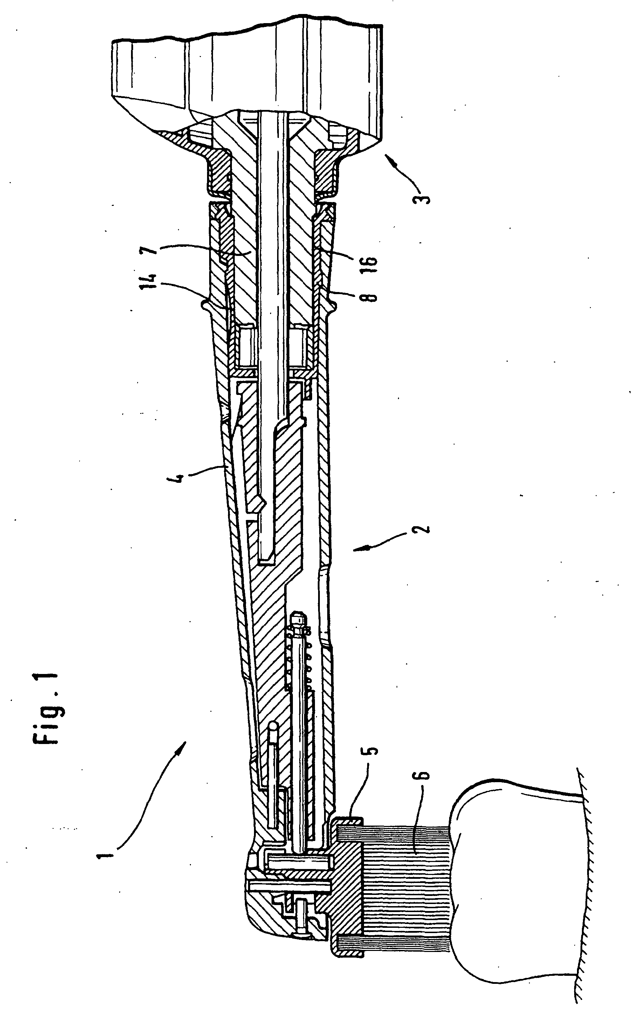

In der Figur 1 ist eine elektirsche Zahnbürste 1 dargestellt, die ein Bürstenteil 2 und ein Handstück 3 aufweist. Das Bürstenteil 2 ist auf das Handstück 3 aufgesteckt, kann aber beispielsweise zum Austausch von dem Handstück 3 abgezogen und durch ein anderes Bürstenteil 2 ersetzt werden.

Das Bürstenteil 2 weist ein längliches Trägerrohr 4 auf, an dessen dem Handstück 3 abgewandten Ende ein Borstenträger 5 etwa rechtwinklig absteht. Der Borstenträger 5 ist mit einer Mehrzahl von Borsten 6 versehen. Das Handstück 3 weist an seinem dem Bürstenteil 2 zugewandten Ende eine Aufnahme 7 auf, auf die das Bürstenteil 2 aufgesteckt ist.

In dem Handstück 3 sind des weiteren ein Elektromotor und ein Akkumulator untergebracht. Im eingeschalteten Zustand der elektrischen Zahnbürste 1 wird eine von dem Elektromotor erzeugte Dreh- oder Schwenkbewegung über Wellen, Kupplungen, Getriebe und dergleichen auf den Borstenträger 5 übertragen, der dadurch eine Dreh- oder Schwenkbewegung um eine zu den Borsten 6 etwa parallele Achse ausführt.

Ein Benutzer kann im eingeschalteten Zustand der elektrischen Zahnbürste 1 die Borsten 6 auf die Zahnoberflächen seiner Zähne aufsetzen und die Dreh- oder Schwenkbewegung des Borstenträgers 5 zur Reinigung und Pflege der Zähne ausnutzen.

In dem dem Handstück 3 zugewandten Ende des Bürstenteils 2 ist eine Hülse 8 vorgesehen. In diesem Bereich des Bürstenteils 2 ist das Trägerrohr 4 etwa zylindrisch ausgebildet und die Hülse 8 ist dort in das Trägerrohr 4 eingesteckt. Die Hülse 8 ist in dem Trägerrohr 4 beispielsweise durch in Nuten eingreifende Stege oder dergleichen gegen ein Verdrehen gesichert. Des weiteren ist die Hülse 8 durch Rastmittel oder dergleichen gegen ein Herausziehen aus dem Trägerrohr 4 gesichert.

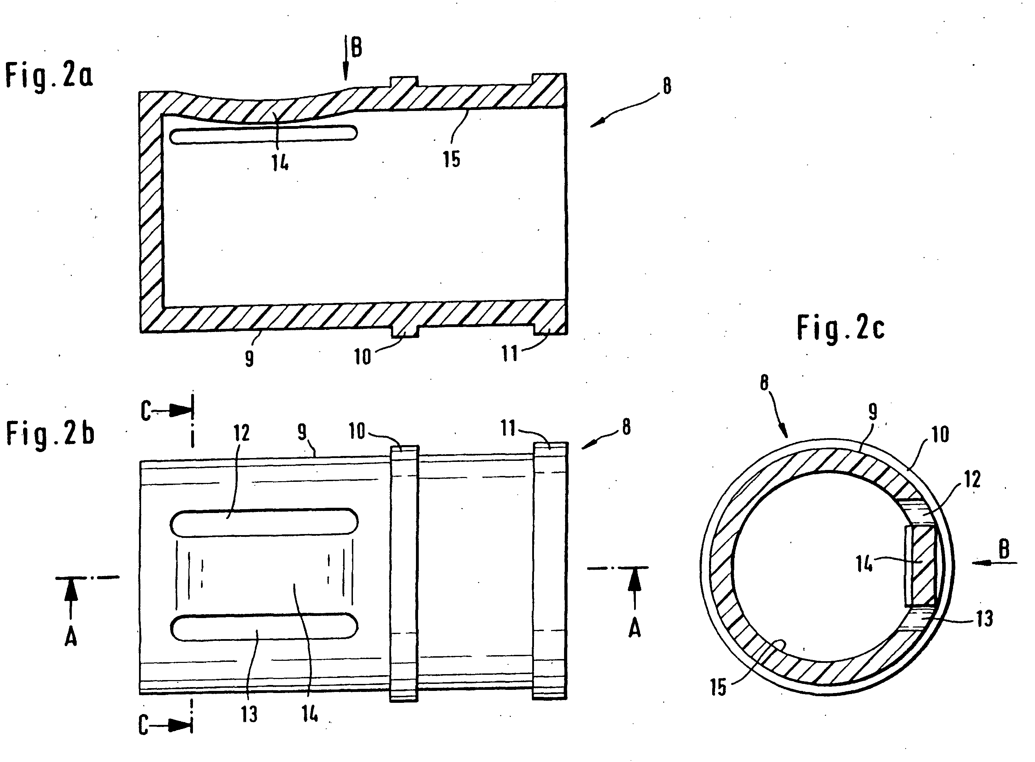

In den Figuren 2a bis 2c ist die Hülse 8 des Bürstenteils 2 vergrößert dargestellt.

Die Hülse 8 ist zylindrisch ausgebildet und weist einen im wesentlichen kreisförmigen Querschnitt auf. An ihrer Außenwand 9 besitzt die Hülse 8 zwei umlaufende Ringstege 10, 11, von denen zumindest einer als Rastmittel dienen kann.

In Längsrichtung weist die Hülse 8 zwei Schlitze 12, 13 auf, zwischen denen ein Steg 14 ausgebildet ist. Der Steg 14 ist, wie insbesondere der Figur 2a zu entnehmen ist, mit einer Krümmung oder Biegung versehen. Diese ist in Richtung nach innen, also hin zu kleineren Durchmessern und damit in Richtung zu der Aufnahme 7 des Handstücks 3 ausgerichtet.

Zumindest der Steg 14 ist aus einem biegefähigen oder elastischen Material hergestellt. Insbesondere ist die gesamte Hülse 8 aus einem Kunststoff hergestellt. Damit bildet der Steg 14 einen Biegebalken mit federnden Eigenschaften. Der Steg 14 hat damit die Funktion von Federmitteln.

Die Innenwand 15 der Hülse 8 ist im Hinblick auf ihre Querschnittsform und ihren Durchmesser an die Außenwand 16 der Aufnahme 7 angepaßt, so daß die Aufnahme 7 formschlüssig in die Hülse 4 einsteckbar ist. Gegebenenfalls weisen die Hülse 8 und die Aufnahme 7 derart ausgebildete Querschnittsformen auf, daß die Hülse 8 und damit das Bürstenteil 2 nur in einer bestimmten Drehstellung auf die Aufnahme 7 und damit auf das Handstück 3 aufsteckbar ist.

Soll das Bürstenteil 2 auf das Handstück 3 aufgesteckt werden, so muß hierzu die Aufnahme 7 des Handstücks 3 in die Hülse 8 des Bürstenteils 2 eingeführt werden. Die Hülse 8 ist dabei ihrerseit in das Trägerrohr 4 des Bürstenteils 2 eingesteckt. Erreicht die Aufnahme 7 die nach innen hervorstehende Biegung des Stegs 14, so erzeugt dies einen gewissen Widerstand. Der Widerstand wird dadurch überwunden, daß die Biegung des Stegs 14 zurückgedrückt wird. Dann kann die Aufnahme 7 vollständig in die Hülse 8 eingeführt werden. Das Bürstenteil 2 ist damit vollständig auf das Handstück 3 aufgesteckt.

Abweichend von der beschriebenen Hülse 8 können auch zwei oder mehrere Stege 14 vorhanden sein. Der oder die Stege 14 müssen nicht zweiseitig befestigt sein, sondern es ist auch möglich, den oder die Stege 14 nur einseitig einzuspannen. Die den oder die Stege 14 bildenden Schlitze 12, 13 können auch durch Ausdünnungen der Hülse 8 realisiert sein, so daß die Hülse an ihrem Umfang vollständig geschlossen ist. Im weitesten Sinn können die Federmittel auch ganz allgemein als elastische Komponenten in die Hülse 8 eingelassen werden.

Ebenfalls ist es möglich, daß die Federmittel unmittelbar an dem Trägerrohr 4 angeordnet sind, so daß die Hülse 8 gar nicht erforderlich ist. Dies kann z.B. dadurch realisiert sein, daß der oder die Stege 14 direkt an dem Trägerrohr 4 angebracht sind. Zumindest der oder die Stege 14 oder auch das gesamte Trägerrohr 4 sind dann insbesondere aus einem Kunststoff hergestellt, wodurch die erwünschten federnden Eigenschaften erreicht werden.

Ebenfalls ist es möglich, daß die Federmittel z.B. in der Form einer Hülse oder dergleichen auf die Aufnahme 7 aufgesteckt sind.

Des weiteren können die Federmittel derart ausgestaltet sein, daß sie nicht nur eine Kraft in radialer Richtung nach außen erzeugen, sondern zusätzlich auch noch eine Kraft in tangentialer Richtung. Dadurch können tangentiale Bewegungen des Bürstenteils im eingeschalteten Zustand vermieden und Vibrationen und Geräusche weiter vermindert werden.

## Patentansprüche

1. Bürstenteil (2) für eine elektrische Zahnbürste (1 ), mit einem Trägerrohr (4), an dem ein Borstenträger (5) mit einer Mehrzahl von Borsten (6) gehalten ist, wobei das Trägerrohr (4) eine, eine Außenwand (16) aufweisenden Aufnahme (7) eines Handstücks (3) der elektrischen Zahnbürste (1) aufsteckbar ist und in dem Trägerrohr (4) eine Welle zum Antrieb des Borstenträgers (5) aufgenommen ist, welche mit einer Antriebswelle des Handstücks (3) in Antriebsverbindung bringbar ist, **dadurch gekennzeichnet, daß** an dem Bürstenteil (2) Federmittel angebracht sind, die ein montierten Zustand zwischen dem Trägerrohr (4) und der Außenwand (16) der Aufnahme (7) angeordnet sind.

2. Bürstenteil (2) nach Anspruch 1, **dadurch gekennzeichnet, daß** eine in das Trägerrohr (4) einsteckbare Hülse (8) vorgesehen ist, die die Federmittel aufweist.

3. Bürstenteil (2) nach einem der Ansprüche 1 oder 2, **dadurch gekennzeichnet, daß** das Trägerrohr (4) mit den Federmitteln versehen ist.

4. Bürstenteil (2) nach einem der Ansprüche 2 oder 3, **dadurch gekennzeichnet, daß** die Hülse (8) bzw. das Trägerrohr (4) als Federmittel mindestens einen Steg (14) aufweist.

5. Bürstenteil (2) nach Anspruch 4, **dadurch gekennzeichnet, daß** der Steg (14) mit einer in Richtung zu der Aufnahme (7) gekrümmten Biegung versehen ist.

6. Bürstenteil (2) nach einem der Ansprüche 2 bis 5, **dadurch gekennzeichnet, daß** die Hülse (8) bzw. das Trägerrohr (4) aus einem Kunststoff hergestellt ist.

7. Bürstenteil nach einem der vorstehenden Ansprüche, **dadurch gekennzeichnet, daß** die Federmittel auf die Aufnahme (7) aufsteckbar sind.

8. Bürstenteil (2) nach einem der vorhergehenden Ansprüche, **dadurch gekennzeichnet, daß** die Federmittel als Biegebalken mit federnden Eigenschaften ausgebildet sind.

9. Elektrische Zahnbürste (1) mit einem Handstück (3) und mit einem Bürstenteil (2) nach einem der vorstehenden Ansprüche.

## Claims

1. A brush section (2) for an electric toothbrush (1), having a carrier tube (4) to which is fitted a bristle carrier (5) comprising a plurality of bristles (6), said carrier tube (4) being adapted to be plugged on a mount (7), having an outside wall (16), of a hand piece (3) of the electric toothbrush (1) and said carrier tube (4) receiving a shaft for driving the bristle carrier (5), said shaft being adapted to be in driving relationship to a drive shaft of the hand piece (3), **characterized in that** provision is made for spring elements on the brush section (2), which in assembled condition are arranged between the carrier tube (4) and the outside wall (16) of the mount (7).

2. The brush section (2) as claimed in claim 1, **characterized in that** provision is made for a sleeve (8) equipped with the spring elements, said sleeve being adapted to plug into the carrier tube (4).

3. The brush section (2) as claimed in any one of the claims 1 or 2, **characterized in that** the carrier tube (4) is equipped with the spring elements.

4. The brush section (2) as claimed in any one of the claims 2 or 3, **characterized in that** the sleeve (8) or the carrier tube (4) includes as spring elements at least one shoulder (14).

5. The brush section (2) as claimed in claim 4,
**characterized in that** the shoulder (14) has a bend that curves in the direction of the mount (7).

6. The brush section (2) as claimed in any one of the claims 2 to 5, **characterized in that** the sleeve (8) or the carrier tube (4) is made of a plastics material.

7. The brush section (2) as claimed in any one of the preceding claims, **characterized in that** the spring elements are adapted to plug onto the mount (7).

8. The brush section (2) as claimed in any one of the preceding claims, **characterized in that** the spring elements are constructed as bending bars having resilient properties.

9. An electric toothbrush (1) with a hand piece (3) and a brush section (2) according to any one of the preceding claims.

## Revendications

1. Pièce de brosse (2) pour brosse à dents électrique (1), comportant un tube support (4), sur lequel est maintenu un support de soies (5) comprenant une pluralité de soies (6), le tube support (4) pouvant être posé sur un récepteur (7) présentant une paroi extérieure (16) d'un manche (3) de la brosse à dents électrique (1) et un arbre servant à commander le support de soies (5) étant intégré dans le tube support (4), arbre qui peut être mis en liaison de commande avec un arbre de commande du manche (3), que sont installés sur la pièce de brosse (2) des moyens à ressort qui sont disposés, à l'état monté, entre le tube support (4) et la paroi extérieure (16) du récepteur (7).

2. Pièce de brosse (2) selon la revendication 1, **caractérisée en ce qu'**est prévu un manchon (8) insérable dans le tube support (4), et qui présente des moyens à ressort.

3. Pièce de brosse (2) selon l'une quelconque des revendications 1 ou 2, **caractérisée en ce que** le tube support (4) est équipé des moyens à ressort.

4. Pièce de brosse (2) selon l'une quelconque des revendications 2 ou 3, **caractérisée en ce que** le manchon (8) ou le tube support (4) présente au moins une traverse (14) comme moyen à ressort.

5. Pièce de brosse (2) selon la revendication 4, **caractérisée en ce que** la traverse (14) est pourvue d'une courbure incurvée en direction du récepteur (7).

6. Pièce de brosse (2) selon l'une quelconque des revendications 2 à 5, **caractérisée en ce que** le manchon (8) ou le tube support (4) est fabriqué en matière plastique.

7. Pièce de brosse (2) selon l'une quelconque des revendications précédentes, **caractérisée en ce que** les moyens à ressort (7) peuvent être posés sur le récepteur (7).

8. Pièce de brosse (2) selon l'une quelconque des revendications précédentes, **caractérisée en ce que** les moyens à ressort sont conçus comme des barres à flexion à propriétés résilientes.

9. Brosse à dents électrique (1) comportant un manche (3) et une pièce de brosse (2) selon l'une quelconque des revendications précédentes.
